# EUROPÄISCHE PATENTSCHRIFT

(11) **EP 0 875 986 B1**
(45) Veröffentlichungstag und Bekanntmachung des Hinweises auf die Patenterteilung: **03.03.2004**
(21) Anmeldenummer: 98106965.1
(22) Anmeldetag: 16.04.1998
(51) Int. Cl.: H02M 7/155, H02H 3/24, H02J 3/14

(54) **Steuervorrichtung mit Mikroprozessor und Unterspannungsschutz**
Controlling device with microprocessor provided with undervoltage-protection
Dispositif de commande à microprocesseur avec protection contre les sous-tensions

(30) Priorität: 29.04.1997 DE 19718160
(43) Veröffentlichungstag der Anmeldung: 04.11.1998
(73) Patentinhaber: BSH Bosch und Siemens Hausgeräte GmbH, 81739 München (DE)
(72) Erfinder: Menten, Frank, Dipl.-Ing. (FH), 93053 Regensburg (DE); Puchta, Ralf, Dipl.-Ing. (FH), 93053 Regensburg (DE)

(56) Entgegenhaltungen:
- EP-A- 0 062 313
- EP-A- 0 410 423
- WO-A-95/22190
- US-A- 4 935 642

## Beschreibung

Die Erfindung bezieht sich auf eine Mikroprozessor-Steuervorrichtung mit Unterspannungsschutz gemäß Patentanspruch 1; derartige Mikroprozessor-Steuervorrichtungen werden z.B. in modernen Kühl-/Gefriergeräten eingesetzt und dienen z.B. zur Ansteuerung eines Verdichters, einer Heizung, eines Lüfters oder von Signalanzeigen.

Haushaltsgeräte der vorgenannten Art werden üblicherweise aus dem Haushalts-Einphasenwechselspannungsnetz gespeist; dabei wird dann der Mikroprozessor über einen Transformator mit nachgeschaltetem Gleichrichter und gegebenenfalls Spannungsregler versorgt. Der Mikroprozessor schaltet aufgrund von internen Algorithmen bzw. Bedienelemente-Vorgaben verschiedene Verbraucher der vorgenannten Art; hinsichtlich der derart über den Mikroprozessor an das speisende Einphasenwechselspannungsnetz anschaltbaren Verbrauchern ist darauf zu achten, daß bestimmte Lasten - wie z.B. im Fall eines Kühl-/Gefriergerätes der Verdichter - wegen ansonsten zu großer Stromaufnahme nicht dauerhaft mit zu geringer speisender Primärwechselspannung betrieben werden dürfen. Es ist daher eine Überwachung der Primärwechselspannung als Unterspannungsschutz für kritische Verbraucher vorzusehen.

Es ist Aufgabe vorliegender Erfindung, mit geringem steuerungstechnischem Aufwand einen sicheren Unterspannungsschutz für durch die Mikroprozessor-Steuervorrichtung an die speisende Primärwechselspannung anzuschließenden Verbraucher bzw. Lasten gewährleisten zu können.

Aus der WO 95/22190 sind ein Verfahren und eine Vorrichtung zur Fernsteuerung einer elektrischen Last bekannt. Eine dort vorgesehene Schaltvorrichtung schaltet in Abhängigkeit von Signalabweichungen.

Aus der EP 0410 423 A2 ist ein System bekannt, das eine Mehrzahl von Spannungsversorgungskreisen aufweist. Diese sind auf einer monolithischen integrierten Schaltung aufgebracht.

Aus der EP 0 062 313 A2 sind Kühl- oder Tiefkühlmöbel bekannt, die mit elektrischen Einrichtungen zur Durchführung verschiedener Betriebs- und Überwachungsfunktionen ausgestattet sind. Zur Steuerung und Überwachung dieser elektrischen Einrichtungen ist ein zentrales elektronisches Steuergerät vorgesehen, das als wesentliches Bauelement einen Mikroprozessor aufweist.

Die Lösung dieser Aufgabe gelingt erfindungsgemäß durch eine Mikroprozessor-Steuervorrichtung gemäß Patentanspruch 1; vorteilhafte Ausgestaltungen der Erfindung sind jeweils Gegenstand der Unteransprüche.

Durch die erfindungsgemäße Auslegung der Mikroprozessor-Steuervorrichtung ist ein sicherer Unterspannungsschutz für gegen Unterspannung empfindliche Verbraucher auch dann gewährleistet, wenn zur Versorgung des für die Ansteuerelemente der Verbraucher vorgesehenen Mikroprozessors ein preiswerter lastempfindlicher Transformator mit bei steigendem Sekundärstrom nicht konstanter, sondern fallender Sekundärspannung eingesetzt wird.

Zweckmäßigerweise wird dem Mikroprozessor ein Spannungsregler mit aufgrund einer definierten Spannungs-Schaltschwelle aktivierbarem Istwerteingang und mit einem zugeordneten Digitalausgang vorgeschaltet, der als Interrupt-Ausgang durch Signalwechsel (fallend/steigend bzw. steigend/fallend) bei Unterschreiten bzw. Überschreiten einer definierten Mindestspannung und damit einer Spannungs-Schaltschwelle vorzugsweise die gegen Unterspannung empfindlichen Verbraucher abschaltet bzw. wieder zuschaltet.

Eine Anpassung der im allgemeinen bauspezifisch vorgegebenen Spannungs-Schaltschwelle an die definierte Mindestspannung erfolgt in besonders einfacher Weise mit einer der Gleichrichter-Vorrichtung nachgeschalteten Spannungsteiler-Schaltung.

Die Erfindung sowie weitere vorteilhafte Ausgestaltungen der Erfindung gemäß den Unteransprüchen werden im folgenden anhand eines Ausführungsbeispiels in der Zeichnung näher erläutert; darin zeigen:
- FIG 1: im Blockschaltbild eine erfindungsgemäße Mikroprozessor-Steuervorrichtung;
- FIG 2: beispielhafte Verläufe der Sekundärwechselspannung des die Mikroprozessor-Steuervorrichtung versorgenden Transformators bei verschiedenen, durch die Ansteuer-Last gegebenen Sekundärstrombelastungen für einen belastungsempfindlichen Transformator;
- FIG 3: den Funktionsablauf einer erfindungsgemäßen Mikroprozessor-Steuervorrichtung mit Unterspannungsschutz.

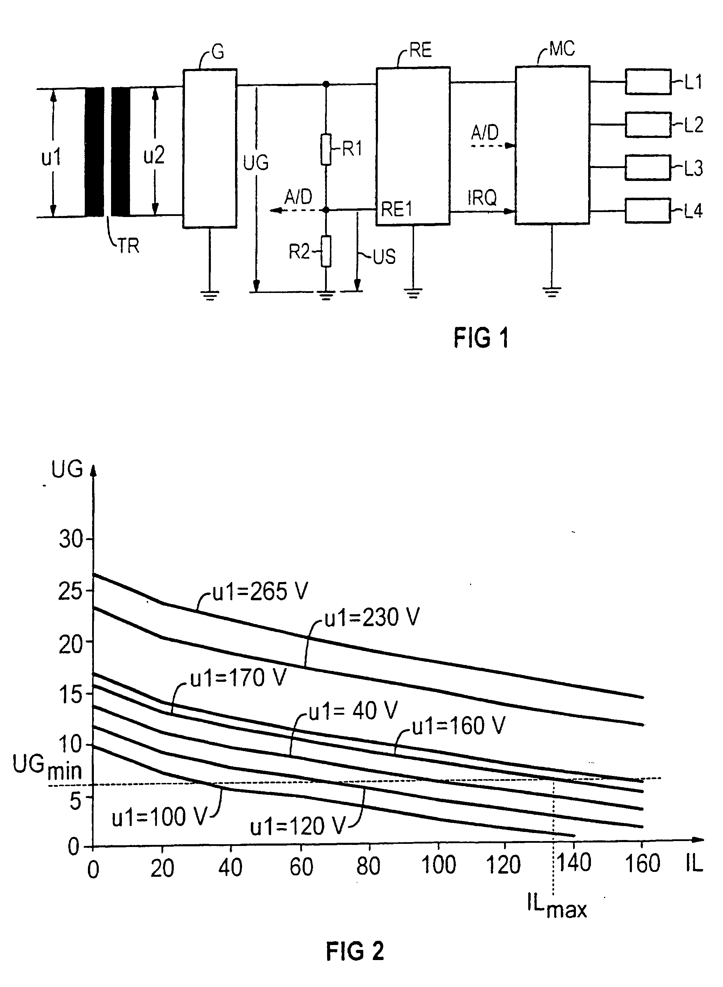

FIG 1 zeigt im Blockschaltbild eine erfindungsgemäße Mikroprozessor-Steuervorrichtung für vier Verbraucher mit entsprechend vier Ansteuer-Lasten L1-L4 zur Aktivierung von Einschalt- bzw. Ausschaltbefehlen von z.B. Relais oder Triacs, mittels derer die Verbraucher an ein Einphasenwechselspannungsnetz mit der Primärwechselspannung u1 angeschlossen werden. Von dieser Primärwechselspannung u1 wird gemäß im folgenden näher erläuterter Weise auch die Mikroprozessor-Steuervorrichtung gemäß FIG 1 gespeist und überwacht.

Zur Versorgung der Mikroprozessor-Steuervorrichtung wird die Primärwechselspannung u1 von beispielsweise maximal 220 V durch einen Transformator TR auf eine Sekundärwechselspannung u2 von z.B. 20 V heruntertransformiert. Die Sekundärwechselspannung u2 wird anschließend durch eine nachgeschaltete Gleichrichter-Vorrichtung G gleichgerichtet und u.a. als Versorgungsspannung von beispielsweise 20 V an den Eingang eines nachgeschalteten Spannungsreglers RE und von diesem als Versorgungsspannung von beispielsweise 5 V an einen nachgeschalteten Mikroprozessor MC weitergegeben. Über vier einzelne Ausgänge des Mikroprozessors MC werden Ansteuerbefehle ausgegeben, um einen von vier Verbrauchern an die Primärwechselspannung u1 anzuschließen oder von dieser abzuschalten; die jeweiligen Ansteuerbefehle führen zu Ansteuer-Lasten L1-L4.

Eine Ausgangsspannung UG der Gleichrichtervorrichtung G wird als Repräsentativwert für die jeweilige Sekundärwechselspannung u2 für den erfindungsgemäßen Unterspannungsschutz hinzugezogen und über eine Spannungsteilerschaltung R1/R2 mit definierter Spannung-Schaltschwelle US an einen Istwerteingang RE1 des Spannungsreglers RE bzw. einen A/D-Eingang des Mikroprozessors MC gegeben. Wenn die Ausgangsspannung UG einen Mindestwert der Ausgangsspannung (z.B. 6 Volt) erreicht hat, wird aufgrund der definierten Spannungs-Schwelle US (z.B. 1.25 Volt) durch ein digitales Signal an einem IRQ-Eingang oder ein abgefragtes Analogsignal an einem A/D-Eingang des Mikroprozessors MC dieser veranlaßt, einen zuvor eingeschalteten Verbraucher, insbesondere einen unterspannungsempfindlichen Verbraucher, wie z.B. den durch die Ansteuer-Last L1 repräsentierenden Verdichter, abzuschalten bzw. seine Zuschaltung an das speisende Einphasenwechselspannungsnetz zu verhindern.

FIG 2 verdeutlicht zunächst die Lastempfindlichkeit des verwendeten Transformators TR anhand von verschiedenen Kennlinien der Primärwechselspannung u1 für jeweils 100 V, 120 V, 140 V, 160 V, 170 V, 230 V, 265 V in jeweiliger Abhängigkeit von dem durch die Ansteuer-Lasten L1-L4 bestimmten Belastungsstrom IL. Der jeweilige Belastungsstrom IL ergibt sich durch den Standby-Laststrom der Steuervorrichtung von beispielsweise 40 mA sowie einer z.B. durch eine Ansteuerung für einen Verdichter repräsentierten Ansteuer-Last L1 von 60 mA, einer durch eine Ansteuerung für eine Leuchtanzeigevorrichtung repräsentierten Ansteuer-Last L2 von 20 mA, einer durch eine Ansteuerung für eine Heizung repräsentierten dritten Ansteuer-Last L3 von 10 mA und einer durch eine Ansteuerung für einen Lüfter repräsentierten vierten Ansteuer-Last L4 von 5 mA, derart daß sich im vorliegenden Ausführungsbeispiel eine maximale Belastung durch einen maximalen Belastungsstrom ILₘₐₓ von 135 mA ergibt. Bei zunehmendem Belastungsstrom IL sinkt die Sekundärwechselspannung u2 und dementsprechend die entsprechende Ausgangsspannung UG am Ausgang der Gleichrichtervorrichtung G.

Falls von einer minimal zulässigen Primärwechselspannung u1 von 160 V ausgegangen wird, ergibt sich bei dem angenommenen maximalen Belastungsstrom ILₘₐₓ für einen entsprechenden Repräsentativwert der Ausgangsspannung UG der Gleichrichtervorrichtung G ein Mindestwert für die Ausgangsspannung von ca. 6 V. Um bei diesem Mindestwert der Ausgangsspannung UG ein Ansprechen des Spannungsreglers RE mit entsprechendem Flankenwechsel an dem digitalen IRQ-Eingang des Mikroprozessors zu gewährleisten, ist nach einer Ausgestaltung der Erfindung dem Istwerteingang RE1 des Spannungsreglers RE eine Spannungsteiler-Schaltung R1;R2 derart vorgeschaltet, daß bei einem Mindestwert der Ausgangsspannung UG von 6 V eine Spannungs-Schaltschwelle US von z.B. 1,25 V entsprechend der bauteilspezifischen Auslegung des Istwerteinganges des Spannungsreglers RE gewährleistet ist. In ähnlicher Weise kann durch eine Spannungsteilerschaltung ein Schwellwert gebildet werden, der an einem regelmäßig abgefragten A/D-Eingang des Mikroprozessors MC zu einer Ab- bzw. Zuschaltung der Ansteuerung eines Verbrauchers führt.

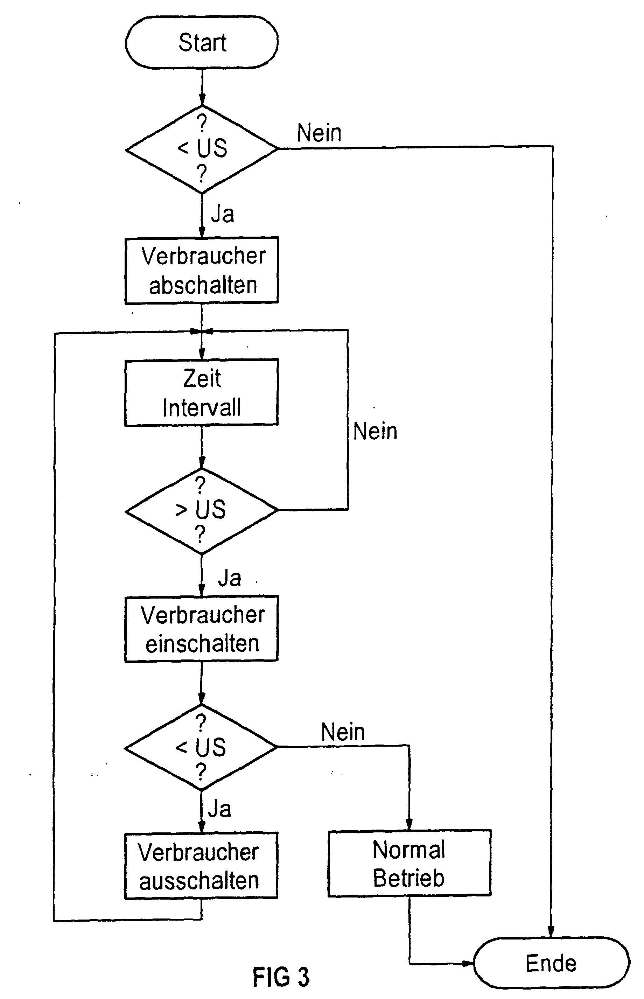

FIG 3 erläutert anhand eines Funktionsablaufs nochmals die erfindungsgemäße Mikroprozessor-Steuervorrichtung. Ein derartiger Prüfablauf kann jeweils nur beim Zuschalten eines zusätzlichen Verbrauchers oder jeweils nach Erreichen einer zulässigen Unterspannung oder aber auch fortwährend als taktweiser Prüfvorgang durch kurzzeitiges Zuschalten eines weiteren, vorzugsweise unkritischen Verbrauchers, erfolgen. Das Abschalten eines kritischen Verbrauchers erfolgt jeweils in dem Fall, daß in einem Abfragefunktionsblock die Spannungs-Schaltschwelle US und damit die minimal zulässige Primärwechselspannung u1 unterschritten wurde oder durch Zuschalten eines Verbrauchers, falls diese Spannungs-Schaltschwelle US überschritten und damit eine hinreichende Primärwechselspannung u1 wieder erreicht ist.

## Patentansprüche

1. Mikroprozessor-Steuervorrichtung zum Unterspannungsschutz für aus einem Wechselspannungsnetz gespeiste Verbraucher
- mit einer Speisung der Steuervorrichtung aus dem Wechselspannungsnetz über einen Transformator (TR);
- mit einem dem Mikroprozessor (MC) eingangsseitig zugeordneten, mit der Sekundärwechselspannung (u2) des Transformators (TR) gespeisten Gleichrichter-Vorrichtung (G);
- mit einer Überwachung der Ausgangsspannung (UG) der Gleichrichter-Vorrichtung (G), derart, dass bei Unterschreiten einer definierten Mindestspannung zumindest einer der, insbesondere hinsichtlich einer Unterspannungsversorgung empfindlichen, Verbraucher über den Mikroprozessor (MC) abschaltbar bzw. nicht einschaltbar ist
**dadurch gekennzeichnet, dass** der Mindestwert (UGₘᵢₙ) der Ausgangsspannung (UG) der Gleichrichter-Vorrichtung (G) durch die bei maximal möglicher Ansteuer-Last (L1-L4) zur Ansteuerung der Verbraucher noch zulässige Primärwechselspannung (u1) des Wechselspannungsnetzes definiert ist und dass der Mikroprozessor (MC) bei Erreichen des Mindestwertes (UGₘᵢₙ) aufgrund einer entsprechenden Spannungs-Schaltschwelle (US) zur Abschaltung bzw. Wiedereinschaltung des Verbrauchers aktivierbar ist.

2. Mikroprozessor-Steuervorrichtung nach dem vorhergehenden Anspruch 1
- mit einem dem Mikroprozessor (MC) eingangsseitig zugeordneten Spannungsregler (RE);
- mit dem Spannungsregler (RE) eingangsseitig zugeordneten, mit der Sekundärwechselspannung (u2) des Transformator (TR) gespeisten Gleichrichter-Vorrichtung (G);
- mit einem Spannungsregler (RE) mit einem bei Erreichen des Mindestwertes der Ausgangsspannung (UG) aufgrund einer entsprechend definierten Spannungs-Schaltschwelle (US) aktivierbaren Istwerteingang (RE1);
- mit bei Unterschreiten bzw. Überschreiten der Spannungs-Schaltschwelle (US) über einen Digitalausgang (IRQ) des Spannungsreglers (RE) durch Signalwechsel über den Mikroprozessor (MC) abschaltbarem bzw. wiedereinschaltbarem kritischen Verbraucher.

3. Mikroprozessor-Steuervorrichtung nach zumindest einem der vorhergehenden Ansprüche
- mit einer der Gleichrichter-Vorrichtung (G) nachgeschalteten Spannungsteiler-Schaltung (R1;R2) zur festlegbaren Anpassung des Mindestwertes (UGₘᵢₙ) der Ausgangsspannung (UG) der Gleichrichter-Vorrichtung (G) an den Spannungswert der Spannungs-Schaltschwelle (US).

4. Mikroprozessor-Steuervorrichtung nach zumindest einem der vorhergehenden Ansprüche
- mit einem Überprüfen der minimal zulässigen Primärwechselspannung (u1) durch gezieltes Prüf-Zuschalten eines weiterenVerbrauchers, insbesondere eines hinsichtlich einer speisenden Unterspannung unkritischen Verbrauchers.

5. Mikroprozessor-Steuervorrichtung nach zumindest einem der vorhergehenden Ansprüche
- mit einer Verwendung für ein Kühl-/Gefriergerät;
- mit einer Ansteuer-Last (L1) für einen Verdichter als Verbraucher.

6. Mikroprozessor-Steuervorrichtung nach zumindest einem der vorhergehenden Ansprüche
- mit einer Verwendung für ein Kühl-/Gefriergerät;
- mit einer Ansteuer-Last (L2) für eine Anzeigevorrichtung als Verbraucher.

7. Mikroprozessor-Steuervorrichtung nach zumindest einem der vorhergehenden Ansprüche
- mit einer Verwendung für ein Kühl-/Gefriergerät;
- mit einer Ansteuer-Last (L3) für eine Heizung als Verbraucher.

8. Mikroprozessor-Steuervorrichtung nach zumindest einem der vorhergehenden Ansprüche
- mit einer Verwendung für ein Kühl-/Gefriergerät;
- mit einer Ansteuer-Last (L4) für einen Lüfter als Verbraucher.

9. Mikroprozessor-Steuervorrichtung nach zumindest einem der vorhergehenden Ansprüche
- mit einem lastempfindlichen Transformator (TR), insbesondere einem Transformator (TR) mit bei steigendem Sekundärstrom (i2) fallender Sekundärwechselspannung (u2).

## Claims

1. Microprocessor control device for low-voltage protection for consumers supplied from an alternating voltage mains,
- with a supply of the control device from the alternating voltage mains by way of a transformer (TR);
- with a rectifier device (G) associated with the microprocessor (MC) at the input side and supplied by the secondary alternating voltage (u2) of the transformer (TR); and
- with a monitoring of the output voltage (UG) of the rectifier device (G) in such a manner that if a defined minimum voltage is fallen below at least one of the consumers, particularly a consumer or consumers sensitive with respect to a low voltage supply, is switchable off, or is not switchable on, by way of the microprocessor,
**characterised in that** the minimum value (UGₘᵢₙ) of the output voltage (UG) of the rectifier device (G) is defined by the still-permissible primary alternating voltage (u1) of the alternating voltage mains in maximum possible drive control load (L1-L4) for control of the consumers and that the microprocessor (MC) on attainment of the minimum value (UGₘᵢₙ) is activatable on the basis of a corresponding voltage switching threshold (US) for switching off or switching back on the consumer.

2. Microprocessor control device according to the preceding claim 1,
- with a voltage regulator (RE) associated with the microprocessor (MC) at the input side;
- with a rectifier device (G) associated with the voltage regulator (RE) at the output side and supplied by the secondary alternating voltage (u2) of the transformer (TR);
- with a voltage regulator (RE) with an actual value input (RE1) activatable on attainment of the minimum value of the output voltage (UG) on the basis of a corresponding defined voltage switching threshold (US); and
- with critical consumers switchable off or switchable back on via a digital output (IRQ) of the voltage regulator (RE) by signal change by way of the microprocessor (MC) when the voltage switching threshold (US) is fallen below or exceeded.

3. Microprocessor control device according to at least one of the preceding claims,
- with a voltage divider circuit (R1; R2), which is connected downstream of the rectifier device (G), for fixable adaptation of the minimum value (UGₘᵢₙ) of the output voltage (UG) of the rectifier device (G) to the voltage value of the voltage switching threshold (US).

4. Microprocessor control device according to at least one of the preceding claims,
- with a checking of the minimum permissible primary alternating voltage (U1) by selective test switching-on of a further consumer, particularly a consumer which is non-critical with respect to a supply low voltage.

5. Microprocessor control device according to at least one of the preceding claims,
- with a use for a cooling or freezing appliance,
- with a drive control load (L1) for a compressor as consumer.

6. Microprocessor control device according to at least one of the preceding claims,
- with a use for a cooling or freezing appliance,
- with a drive control load (L2) for a display device as consumer.

7. Microprocessor control device according to at least one of the preceding claims,
- with a use for a cooling or freezing appliance,
- with a drive control load (L3) for a heater as consumer.

8. Microprocessor control device according to at least one of the preceding claims,
- with a use for a cooling or freezing appliance,
- with a drive control load (L4) for a fan as consumer.

9. Microprocessor control device according to at least one of the preceding claims,
- with a load-sensitive transformer (TR), particularly a transformer (TR) with a secondary alternating voltage (u2) decaying with increasing secondary current (i2).

## Revendications

1. Dispositif de commande à microprocesseur pour la protection contre les sous-tensions pour des consommateurs alimentés à partir d'un réseau de tension alternative, comprenant
- une alimentation du dispositif de commande à partir du réseau de tension alternative au moyen d'un transformateur (TR) ;
- un dispositif redresseur (G) attribué côté entrée au microprocesseur (MC), alimenté avec la tension alternative secondaire (u2) du transformateur (TR) ;
- un contrôle de la tension de sortie (UG) du dispositif redresseur (G) de telle sorte que, en cas de sous-dépassement d'une tension minimale définie, au moins l'un des consommateurs sensibles, en particulier en ce qui concerne l'alimentation en sous-tension, peut être déconnecté ou ne peut pas être connecté au moyen du microprocesseur (MC)
**caractérisé en ce que** la valeur minimale (UGₘᵢₙ) de la tension de sortie (UG) du dispositif redresseur (G) est définie par la tension alternative primaire (u1) du réseau d'alimentation alternative qui est encore autorisée avec la charge d'amorçage (L1-L4) maximale possible pour l'amorçage des consommateurs et **en ce que** le microprocesseur (MC) peut être activé lorsque la valeur minimale (UGₘᵢₙ) est atteinte sur la base d'un seuil de commutation de tension (US) approprié pour la déconnexion ou le réenclenchement du consommateur.

2. Dispositif de commande à microprocesseur selon la revendication 1 précédente, comprenant
- un régulateur de tension (RE) attribué côté entrée au microprocesseur (MC) ;
- un dispositif redresseur (G) attribué côté entrée au régulateur de tension (RE) et alimenté avec la tension alternative secondaire (u2) du transformateur (TR) ;
- un régulateur de tension (RE) avec une entrée de valeur effective (RE1) qui peut être activée lorsque la valeur minimale de la tension de sortie (UG) est atteinte sur la base d'un seuil de commutation de tension (US) définie en conséquence ;
- un consommateur critique qui peut être déconnecté ou réenclenché en cas de sous-dépassement ou de dépassement du seuil de commutation de tension (US) au moyen d'une sortie numérique (IRQ) du régulateur de tension (RE) par un changement de signal au moyen du microprocesseur (MC).

3. Dispositif de commande à microprocesseur selon au moins l'une quelconque des revendications précédentes, comprenant
- un circuit diviseur de tension (R1 ; R2) monté en aval du dispositif redresseur (G) pour l'adaptation définissable de la valeur minimale (UGₘᵢₙ) de la tension de sortie (UG) du dispositif redresseur (G) à la valeur de tension du seuil de commutation de tension (US).

4. Dispositif de commande à microprocesseur selon au moins l'une quelconque des revendications précédentes, comprenant
- un contrôle de la tension alternative primaire (u1) minimale autorisée par la mise en circuit d'essai appropriée d'un autre consommateur, en particulier d'un consommateur non critique en ce qui concerne une sous-tension d'alimentation.

5. Dispositif de commande à microprocesseur selon au moins l'une quelconque des revendications précédentes, comprenant
- une utilisation pour un appareil de réfrigération/congélation ;
- une charge d'amorçage (L1) pour un compresseur comme consommateur.

6. Dispositif de commande à microprocesseur selon au moins l'une quelconque des revendications précédentes, comprenant
- une utilisation pour un appareil de réfrigération/congélation ;
- une charge d'amorçage (L2) pour un dispositif d'affichage comme consommateur.

7. Dispositif de commande à microprocesseur selon au moins l'une quelconque des revendications précédentes, comprenant
- une utilisation pour un appareil de réfrigération/congélation ;
- une charge d'amorçage (L3) pour un chauffage comme consommateur.

8. Dispositif de commande à microprocesseur selon au moins l'une quelconque des revendications précédentes, comprenant
- une utilisation pour un appareil de réfrigération/congélation ;
- une charge d'amorçage (L4) pour un ventilateur comme consommateur.

9. Dispositif de commande à microprocesseur selon au moins l'une quelconque des revendications précédentes, comprenant
- un transformateur (TR) sensible à la charge, en particulier un transformateur (TR) avec une tension alternative secondaire (u2) décroissante avec un courant secondaire (i2) croissant.
